# EUROPÄISCHE PATENTSCHRIFT

(11) **EP 4 075 121 B1**
(45) Veröffentlichungstag und Bekanntmachung des Hinweises auf die Patenterteilung: **25.06.2025**
(21) Anmeldenummer: 22168061.4
(22) Anmeldetag: 13.04.2022
(51) Int. Cl.: G01N 21/84, G01N 21/88

(54) **PRÜFANORDNUNG UND VERFAHREN ZUR FLUORESZENZBASIERTEN INSPEKTION**
INSPECTION SYSTEM AND METHOD FOR FLUORESCENCE BASED INSPECTION
DISPOSITIF DE VÉRIFICATION ET PROCÉDÉ DESTINÉS À L'INSPECTION BASÉE SUR LA FLUORESCENCE

(30) Priorität: 14.04.2021 DE 102021001955
(43) Veröffentlichungstag der Anmeldung: 19.10.2022
(73) Patentinhaber: Baumer Inspection GmbH, 78467 Konstanz (DE)
(72) Erfinder: Diehl, Hans-Peter, 78464 Konstanz (DE)
(74) Vertreter: Strauss, Steffen

(56) Entgegenhaltungen:
- EP-A2- 1 180 660
- DE-U1- 20 301 286
- JP-A- 2001 153 803

## Beschreibung

Die vorliegende Erfindung betrifft eine Prüfanordnung und ein Verfahren zur fluoreszenzbasierten Inspektion eines mindestens einen Fluorophor beinhaltenden Erzeugnisses.

In vielen Bereichen der verarbeitenden Industrie kommen optische Inspektionsvorrichtungen und entsprechende Inspektionsverfahren mit dem Ziel, produzierte Erzeugnisse auf Fehler und Defekte zu untersuchen, zum Einsatz. Das Vorgehen beinhaltet meistens eine Verarbeitung und Auswertung von Bildaufnahmen der zu untersuchenden Erzeugnisse. Das Ergebnis der jeweiligen Auswertung ist zuverlässiger, je stärker die Fehler und Defekte in den Bildaufnahmen von einwandfreien Bereichen der Erzeugnisse optisch unterscheidbar sind.

Bei einigen Anwendungen werden spezielle optische bzw. spektrale Eigenschaften ausgenutzt, um die Fehler und Defekte in den Bildaufnahmen besser hervorzuheben. So werden beispielsweise für Erzeugnisse, die Fluorophore, Fluorochrome oder andere Arten von Fluoreszenzträgern enthalten, fluoreszenzbasierte Inspektionsvorrichtungen und - verfahren eingesetzt. Insbesondere werden im Rahmen der fluoreszenzbasierten Inspektion Bildaufnahmen der zum Fluoreszieren angeregten Erzeugnisse, basierend auf den hervorgerufenen primären Beleuchtungseffekten, ausgewertet. Unter gewissen Umständen werden jedoch beim Fluoreszieren neben den Fehlern und Defekten auch noch andere, für die Inspektion irrelevante Bereiche der Erzeugnisse in den Bildaufnahmen hervorgehoben. Dadurch kann es dazu kommen, dass Fehler und Defekte womöglich nicht erkannt oder einwandfreie Bereiche der Erzeugnisse fälschlicherweise als fehlerhaft eingestuft werden. Dies führt unweigerlich zu Einbußen der Qualität, Produktivität und/oder Effizienz.

Die Druckschrift DE 20 301 286 U1 zeigt ein Kontrollsystem zur automatischen optischen Überprüfung von farblich gestalteten Oberflächen, z.B. Bodenbelägen, die mit einer zumindest teilweise transparenten Schutzschicht überzogen sind. Das System verfügt über eine kurzwellige Lichtquelle, die zur Beleuchtung des Belags und der Schutzschicht verwendet wird. Zur Erfassung von reflektiertem und rückgestreutem Licht sind Sensoren vorgesehen. Lokale Defekte in der Schutzschicht verursachen einen lokalen Anstieg des rückgestreuten Lichts, so dass Defekte lokalisiert werden können.

Folglich liegt der vorliegenden Erfindung die Aufgabe zugrunde, Mittel zu schaffen, die es erlauben, fluoreszenzbasierte Inspektionen mit erhöhter Detektionsgenauigkeit durchzuführen.

Diese Aufgabe wird erfindungsgemäß durch eine Prüfanordnung gemäß dem Anspruch 1 gelöst.

Die vorliegende Erfindung ist vorteilhaft, da durch die Bestrahlung des Inspektionsbereichs mit der das Anregungsspektrum enthaltenden, ersten elektromagnetischen Strahlung der mindestens eine Fluorophor zum Fluoreszieren angeregt werden kann. Somit sind die optischen Eigenschaften des mindestens einen Fluorophors in dem mindestens einen Fluoreszenzbild abbildbar und entsprechend für die fluoreszenzbasierte Inspektion ausnutzbar.

Ungewollte sekundäre Beleuchtungseffekte, die von dem mindestens einen Fluorophor im Emissionsspektrum hervorgerufen werden, ebenfalls in dem mindestens einen Fluoreszenzbild abgebildet sind und für die Inspektion irrelevante Bereiche des Erzeugnisses hervorheben, können durch die Bestrahlung des Inspektionsbereichs mit der das Emissionsspektrum enthaltenden, zweiten elektromagnetischen Strahlung imitiert und so in dem mindestens einen Referenzbild gezielt nachgebildet werden. Vorteilhafterweise ermöglicht dies, die sekundären Beleuchtungseffekte bei der Erzeugung des Korrekturbildes herauszurechnen, sodass sie im Korrekturbild nicht mehr sichtbar oder zumindest nur reduziert sichtbar sind. Somit kann die fluoreszenzbasierte Inspektion anhand des Korrekturbildes mit erhöhter Detektionsgenauigkeit durchgeführt werden.

Die eingangs zugrunde gelegt Aufgabe kann ferner durch ein Verfahren gemäß dem Anspruch 10 gelöst werden.

Das erfindungsgemäße Verfahren profitiert ebenfalls von den bereits genannten Vorteilen. Insbesondere können mit dem erfindungsgemäßen Verfahren von dem mindestens einen Fluorophor hervorgerufene sekundäre Beleuchtungseffekte, die in dem mindestens einen Fluoreszenzbild abgebildet sind, in dem mindestens einen Referenzbild gezielt nachgebildet werden und lassen sich so bei der Erzeugung des Korrekturbildes herausrechnen. Dies wird im Folgenden noch näher erläutert.

Das Anregungsspektrum und das Emissionsspektrum des mindestens einen Fluorophors sind je nach Anwendung bekannt bzw. vordefiniert. Das Anregungsspektrum kann hierbei einen kontinuierlichen Anregungswellenlängenbereich oder eine diskrete Anregungswellenlänge darstellen. Das Emissionsspektrum kann wiederum einen kontinuierlichen Emissionswellenlängenbereich oder eine diskrete Emissionswellenlänge darstellen.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen. Die nachfolgend beschriebenen Merkmale können, auch wenn dies nicht explizit vermerkt ist, sowohl für das erfindungsgemäße Verfahren als auch für die erfindungsgemäße Prüfanordnung verwendet werden. Also kann ein Verfahrensmerkmal, das nur im Kontext des Verfahrens explizit beschrieben ist, auch ein Vorrichtungsmerkmal darstellen. Umgekehrt kann ein Vorrichtungsmerkmal, das nur im Kontext der Vorrichtung beschrieben ist, ebenso ein Verfahrensmerkmal darstellen. Eine Vorrichtung, eine Einrichtung, ein Modul, ein Block oder eine Einheit kann hierbei einem Verfahrensschritt oder einer Funktion eines Verfahrensschrittes entsprechen. Analog dazu stellen Aspekte, die im Rahmen eines Verfahrensschrittes beschrieben werden, auch eine Beschreibung eines entsprechenden Blocks, Moduls, einer Einrichtung, einer Vorrichtung oder deren Eigenschaft dar. Die in Bezug auf die Vorrichtung beschriebenen Vorteile gelten ebenso für das erfindungsgemäße Verfahren und umgekehrt.

Gemäß der erfindungsgemäßen Prüfanordnung ist die Bilddatenverarbeitungseinrichtung ausgestaltet, das Korrekturbild durch Differenzbildung aus dem mindestens einen Fluoreszenzbild und dem mindestens einen Referenzbild zu erzeugen. Entsprechend wird bei dem erfindungsgemäßen Verfahren das Korrekturbild durch Differenzbildung aus dem mindestens Fluoreszenzbild und dem mindestens einen Referenzbild erzeugt. Dies stellt eine einfach umsetzbare Möglichkeit zur Erzeugung des Korrekturbildes dar. Insbesondere kann die Bilddatenverarbeitungseinrichtung ein Subtraktionsmodul zur Durchführung der Differenzbildung aufweisen. Das Subtraktionsmodul kann ausgestaltet sein, die Farbwerte bzw. Helligkeitswerte aus den Bilddaten des mindestens einen Fluoreszenzbildes und des mindestens einen Referenzbildes pixelweise zu subtrahieren und den jeweiligen Ergebniswert als Farbwert bzw. Helligkeitswert des dazugehörigen Pixels des Korrekturbildes auszugeben.

Zur Steigerung der Genauigkeit kann zwischen dem mindestens einen Fluoreszenzbild und dem mindestens einen Referenzbild eine Geometrieanpassung und/oder einen Kontrastanpassung vor der Differenzbildung erfolgen. Hierfür kann die Bilddatenverarbeitungseinrichtung entsprechend ein Geometrieanpassungsmodul und/oder ein Kontrastanpassungsmodul aufweisen. Das Geometrieanpassungsmodul kann ausgestaltet sein, das mindestens eine Fluoreszenzbild und das mindestens eine Referenzbild gegenseitig deckungsgleich oder zumindest annähernd deckungsgleich auszurichten. Das Kontrastanpassungsmodul kann wiederum ausgestaltet sein, die Kontrastverhältnisse des mindestens einen Fluoreszenzbildes und des mindestens einen Referenzbildes gegenseitig anzugleichen oder zumindest annähernd anzupassen.

Zwecks Automatisierbarkeit der fluoreszenzbasierten Inspektion kann die Bilddatenverarbeitungseinrichtung ausgestaltet sein, im Korrekturbild eine, vorzugsweise automatische Formerkennung durchzuführen. Hierfür kann die Bilddatenverarbeitungseinrichtung ein Formerkennungsmodul aufweisen. Das Formerkennungsmodul kann ausgestaltet sein, die Pixel des Korrekturbildes anhand ihrer Farbwerte bzw. Helligkeitswerte mit einem vordefinierten Grenzwert zu vergleichen und je nach Unterschreitung oder Überschreitung des Grenzwertes zu kategorisieren. Ferner kann das Formerkennungsmodul ausgestaltet sein, benachbarte Pixel mit gleicher Kategorie zu Pixelgruppen zu gruppieren. Außerdem kann das Formerkennungsmodul ausgestaltet sein, Pixelgruppen einer bestimmten Mindestgröße zu identifizieren und diese als Form zu erkennen.

Neben dem soeben rein beispielhaft beschriebenen sog. Schwellwertverfahren können selbstverständlich auch andere, aus dem Stand der Technik bekannte Verfahren bzw. Algorithmen bei der Formerkennung eingesetzt werden.

Die Bilddatenverarbeitungseinrichtung sowie ihre Bestandteile, d.h. das Subtraktionsmodul, das Geometrieanpassungsmodul, das Kontrastanpassungsmodul und/oder das Formerkennungsmodul, können unabhängig voneinander durch Hardware und/oder Software, insbesondere durch computerimplementierte Verfahren, verwirklicht sein. Die Bilddatenverarbeitungseinrichtung ist beispielsweise ein Bilddatenprozessor.

Gemäß einer weiteren möglichen Ausgestaltung kann der erste Wellenlängenbereich außerhalb des Emissionsspektrums des mindestens einen Fluorophors liegen. Mit anderen Worten überschneidet sich der erste Wellenlängenbereich nicht mit dem Emissionsspektrum des mindestens einen Fluorophors. Somit kann sichergestellt werden, dass die erste elektromagnetische Strahlung nicht zum Auftreten der oben genannten sekundären Beleuchtungseffekte beiträgt. Folglich sind die sekundären Beleuchtungseffekte in dem mindestens einen Fluoreszenzbild so schwach wie möglich ausgeprägt.

Um sicherzustellen, dass das Fluoreszieren des mindestens einen Fluorophors in dem mindestens einen Referenzbild so wenig wie möglich abgebildet wird, liegt der zweite Wellenlängenbereich vorzugsweise außerhalb des Anregungsspektrums des mindestens einen Fluorophors. Das heißt, der zweite Wellenlängenbereich überschneidet sich nicht mit dem Anregungsspektrum des mindestens einen Fluorophors.

Die Prüfanordnung kann ausgestaltet sein, den Inspektionsbereich mittels der Strahlquelleneinrichtung jeweils mit der ersten elektromagnetischen Strahlung und mit der zweiten elektromagnetischen Strahlung zu bestrahlen. Die jeweilige Bestrahlung erfolgt hierbei vorzugsweise zeitversetzt. Beispielsweise kann die Strahlquelleneinrichtung hierfür zwei unterschiedliche Strahler bzw. Lichtquellen aufweisen, von denen der erste Strahler ausgestaltet ist, die erste elektromagnetische Strahlung zu erzeugen und der zweite Strahler ausgestaltet ist, die zweite elektromagnetische Strahlung zu erzeugen.

Erfindungsgemäß ist der erste Strahler als eine UV-Lampe, UV-Leuchte, Schwarzlichtlampe oder Schwarzlichtleuchte ausgestaltet. Erfindungsgemäß handelt es sich bei der ersten elektromagnetischen Strahlung um UV-A-Strahlung. Somit kann eine breite Vielfalt an Fluorophoren angeregt werden. Selbstverständlich ist die vorliegende Erfindung nicht auf UV-A-Strahlung beschränkt und kann je nach Anwendung auch andere Arten von Strahlung nutzen.

Der zweite Strahler kann als eine polychrome LED, als eine Farb-LED, insbesondere als eine Blaulicht-LED ausgestaltet sein. Der zweite Strahler ist vorzugsweise eine schmalbandige Lampe oder Leuchte, insbesondere eine monochromatische Lampe oder Leuchte, die Licht mit der Wellenlänge des Emissionsspektrums erzeugt. Somit können im mindestens einen Referenzbild Beleuchtungsverhältnisse geschaffen werden, die mit den Beleuchtungsverhältnissen des mindestens einen Fluoreszenzbildes vergleichbar sind.

Der erste Strahler und/oder der zweite Strahler können jeweils als ein Blitzlicht ausgestaltet sein. Alternativ können der erste Strahler und/oder der zweite Strahler dazu ausgestaltet sein, kontinuierlich in Richtung des Inspektionsbereichs zu strahlen. Entsprechend ist die Prüfanordnung ausgestaltet, den ersten Strahler und/oder den zweiten Strahler je nach Bedarf abzublenden.

Gemäß einer bauraumsparenden Ausgestaltung kann die Strahlquelleneinrichtung auch einen einzelnen regelbaren Strahler, wie z.B. eine regelbare LED, aufweisen, der ausgestaltet ist, jeweils die erste elektromagnetische Strahlung und die zweite elektromagnetische Strahlung zu erzeugen.

Gemäß einer weiteren Ausgestaltung kann die Strahlquelleneinrichtung auch mehrere einzelne Strahler und/oder regelbare Strahler aufweisen. Diese können in vorteilhafter Weise den Inspektionsbereich aus zwei Richtungen bestrahlen. Dies hätte den Vorteil, dass eine homogene Beleuchtung erzielt werden kann.

Gemäß einer weiteren möglichen Ausgestaltung ist der erste Wellenlängenbereich nicht in dem mindestens einen Fluoreszenzbild enthalten. Somit ist der mindestens eine Fluorophor in dem mindestens einen Fluoreszenzbild besser sichtbar, da keine Überlagerung mit der ersten elektromagnetischen Strahlung auftritt. Hierfür kann die Prüfanordnung beispielsweise eine Filtereinrichtung zwischen dem Inspektionsbereich und der Aufnahmeeinrichtung aufweisen, die ausgestaltet ist, den ersten Wellenlängenbereich zu blockieren und/oder lediglich den zweiten Wellenlängenbereich, vorzugsweise das Emissionsspektrum durchzulassen. Insbesondere kann die Filtereinrichtung entsprechende optische Filter, d.h. Bandsperre bzw. Bandstoppfilter und/oder Bandpass bzw. Bandbreitenfilter, aufweisen. Alternativ oder zusätzlich kann eine Sensitivität der Aufnahmeeinrichtung auf den zweiten Wellenlängenbereich beschränkt sein. Diese Sensitivitätseinschränkung kann in der Aufnahmeeinrichtung hardwareseitig und/oder softwareseitig verwirklicht sein.

Um eine Überlagerung mit Umgebungslicht zu verhindern, können das mindestens eine Fluoreszenzbild und/oder das mindestens eine Referenzbild unter vollständiger oder teilweiser Abschirmung von Umgebungslicht erzeugt werden. Hierfür kann die Prüfanordnung optional eine Lichtabschirmeinrichtung zur Verdunkelung oder zumindest zur Abdunkelung des Inspektionsbereichs aufweisen. Alternativ kann die Prüfanordnung auch eine Dunkelkammer aufweisen.

Die Aufnahmeeinrichtung kann beispielsweise eine einzelne Kamera, insbesondere eine Fluoreszenzkamera zur Erzeugung der Bildaufnahmen aufweisen. Selbstverständlich kann die Aufnahmeeinrichtung auch zwei unterschiedliche Kameras aufweisen.

Vorteilhafterweise ist die Aufnahmeeinrichtung dafür ausgelegt, die Erzeugung der Bildaufnahmen wiederholt durchzuführen. Entsprechend ist die Bilddatenverarbeitungseinrichtung auch zur wiederholten Bildverarbeitung der Bildaufnahmen fähig. Somit können mehrere Erzeugnisse nacheinander und/oder Erzeugnisse, deren räumliche Ausdehnung den Inspektionsbereich überschreitet, stückweise inspiziert werden.

Insbesondere für die Inspektion mehrerer und/oder länglicher Erzeugnisse eignet sich eine Ausgestaltung der Prüfanordnung, die ein Fördergerät, beispielsweise ein Förderband, zur Bewegung des Erzeugnisses durch den Inspektionsbereich aufweist. Insbesondere wird dadurch eine kontinuierliche Relativbewegung zwischen dem Erzeugnis und der Aufnahmeeinrichtung ermöglicht. Die Aufnahmen können während dieser kontinuierlichen Relativbewegung erzeugt werden. Somit können hohe Inspektionsgeschwindigkeiten erreicht werden. Mit anderen Worten können dank der kontinuierlichen Relativbewegung mehrere Erzeugnisse und/oder mehrere Teilbereiche eines Erzeugnisses in kürzerer Zeit im bewegten Zustand inspiziert werden.

Zusätzlich oder alternativ kann die Aufnahmeeinrichtung als eine Zeilenkamera ausgestaltet sein. Dies ermöglicht Endlosaufnahmen des Erzeugnisses, sodass beliebig lange Erzeugnisse inspizierbar sind. Die Zeilenkamera wird hierzu kontinuierlich relativ zum Erzeugnis bewegt. Diese Relativbewegung kann mittels des Fördergeräts und/oder durch eine Verschiebung der Zeilenkamera selbst erfolgen. Die Aufnahmeeinrichtung kann entsprechend ausgestaltet sein, die Aufnahmen während dieser Relativbewegung zu erzeugen.

Gemäß einer weiteren möglichen Ausführungsform ist die Prüfanordnung ausgestaltet, das mindestens eine Fluoreszenzbild und das mindestens eine Referenzbild pixelsynchron aufzunehmen. Mit anderen Worten gibt es für jedes Pixel in dem mindestens einen Fluoreszenzbild ein dazugehöriges Pixel in dem mindestens einen Referenzbild, das dieselbe Stelle des Inspektionsbereichs abbildet, und umgekehrt. Dies steigert die Genauigkeit der erfindungsgemäßen Prüfanordnung und des erfindungsgemäßen Verfahrens insbesondere im Hinblick auf die Erzeugung des Korrekturbildes.

Zum Erreichen der Pixelsynchronizität bei kontinuierlicher Relativbewegung kann die Aufnahmeeinrichtung zwei voneinander beabstandete oder nebeneinander angeordnete Zeilenkameras aufweisen. Der Inspektionsbereich wird abwechselnd mit der ersten elektromagnetischen Strahlung und der zweiten elektromagnetischen Strahlung bestrahlt und dabei jeweils mit den zwei Zeilenkameras im Wechsel aufgenommen, wobei die Aufnahmefrequenz der zwei Zeilenkameras derart eingerichtet ist, dass ein zeitlicher Abstand zwischen zwei aufeinanderfolgenden Aufnahmen dem Quotienten aus dem räumlichen Abstand zwischen den zwei Zeilenkameras und der Vorschubgeschwindigkeit des Fördergeräts entspricht.

Die Pixelsynchronizität kann auch erreicht werden, wenn statt der zwei voneinander beabstandeten Zeilenkameras, eine mehrzeilige Zeilenkamera oder eine Matrixkamera zeilenweise oder mehrzeilig angesteuert wird, wobei der Abstand zwischen den angesteuerten Zeilen der Matrixkamera statt dem Abstand zwischen den zwei Zeilenkameras im oben genannten Quotienten verrechnet wird.

Vorzugsweise kann das Fördergerät einen Drehgeber aufweisen, der eine Taktung vorgibt, an welche die Aufnahmefrequenz der einen oder von zwei Kameras angepasst werden kann.

Um Bewegungsunschärfe in dem mindestens einen Fluoreszensbild und dem mindestens einen Referenzbild zu vermeiden, kann das Erzeugnis im Rahmen des erfindungsgemäßen Verfahrens zumindest während des jeweiligen Aufnehmens unbewegt bleiben. Hierdurch lässt sich auch die Pixelsynchronizität zwischen dem mindestens einen Fluoreszenzbild und dem mindestens einen Referenzbild einfach erreichen. Vorzugsweise ist die Aufnahmeeinrichtung in dieser Ausführungsform als eine Matrixkamera ausgestaltet. Bei der Inspektion von mehreren Erzeugnissen können diese, z.B. mit dem Fördergerät diskontinuierlich in den Inspektionsbereich bewegt werden und jeweils für eine gewisse Verweilzeit im Inspektionsbereich statisch verweilen. Die Erzeugung der jeweiligen Bildaufnahmen erfolgt innerhalb dieser Verweilzeit.

Damit sich die erste elektromagnetische Strahlung nicht mit der zweiten elektromagnetischen Strahlung in den Bildaufnahmen überlagern, kann das Aufnehmen des mindestens einen Fluoreszenzbildes und des mindestens einen Referenzbildes im erfindungsgemäßen Verfahren zeitversetzt und /oder ortsversetzt erfolgen.

Die erfindungsgemäße Prüfanordnung ist für ein Erzeugnis geeignet, das aus mehreren Schichten bzw. Lagen aufgebaut ist, wobei eine Schicht den mindestens einen Fluorophor enthält. Das Erzeugnis kann beispielsweise ein industrielles Erzeugnis, insbesondere ein mehrlagiger, mehrschichtiger und/oder laminierter Verbundwerkstoff oder ein Erzeugnis aus derartigem Verbundwerkstoff, z.B. aber nicht ausschließlich ein oder mehrere Fußbodenlaminate sein.

Zur besseren Textverständlichkeit wird die Schicht mit dem mindestens einen Fluorophor nachfolgend als "Fluorophorschicht" bezeichnet, obwohl diese Schicht nicht vollständig aus dem mindestens einen Fluorophor bestehen muss und außer dem mindestens einen Fluorophor noch weitere Bestandteile aufweisen kann.

Die erfindungsgemäße Prüfanordnung ermöglicht es, Fehlstellen (wie z.B. Löcher, Risse, Ablösungen und/oder Faltungen) in der Fluorophorschicht zuverlässig zu detektieren und dabei den störenden Einfluss von sekundären Beleuchtungseffekten zu minimieren. Somit kann die Qualität des Erzeugnisses, insbesondere im Hinblick auf die Fluorophorschicht, verlässlich geprüft werden, ohne dass die sekundären Beleuchtungseffekte das Ergebnis verfälschen oder beeinflussen.

Bei den sekundären Beleuchtungseffekten kann es sich konkret um Ablichtungen von Mustern, Dekors, Logos, Aufschriften und/oder anderen Markierungen handeln, die sich beispielsweise auf einer zur Fluorophorschicht mittelbar oder unmittelbar benachbarten Schicht des Erzeugnisses befinden, von der Fluorophorschicht beim Fluoreszieren beleuchtet werden und deshalb zusammen mit den Fehlstellen im mindestens einen Fluoreszenzbild erscheinen. Aus dem mindestens einen Fluoreszenzbild allein gestaltet sich eine Detektion der Fehlstellen, insbesondere eine Unterscheidung von den Mustern, Dekors, Logos, Aufschriften und/oder anderen Markierungen entsprechend schwierig. Deshalb sind erfindungsgemäß die Muster, Dekors, Logos, Aufschriften und/oder anderen Markierungen auch gezielt in dem mindestens einen Referenzbild sichtbar gemacht. Die Fehlstellen sind hingegen nur in dem mindestens einen Fluoreszenzbild abgebildet. Somit können die Muster, Dekors, Logos, Aufschriften und/oder anderen Markierungen bei der Erzeugung des Korrekturbildes eliminiert werden, während die Fehlstellen in das Korrekturbild übertragen werden.

Die erfindungsgemäße Prüfanordnung und auch das erfindungsgemäße Verfahren eignen sich somit unter anderem für die Qualitätsprüfung von Fußbodenlaminaten, solange eine Laminatschicht den mindestens einen Fluorophor enthält. Das erfindungsgemäße Verfahren kann folglich insbesondere ein Qualitätsprüfungsverfahren für derartige Fußbodenlaminate sein.

Um eine Bestrahlung der Fluorophorschicht zu gewährleisten, kann es sich bei der Fluorophorschicht um eine oberste und/oder äußerste Schicht des Erzeugnisses handeln. Alternativ können sich zwischen der Fluorophorschicht und der Strahlquelleneinrichtung beliebig viele für die erste elektromagnetische Strahlung und die zweite elektromagnetische Strahlung transparente Schichten befinden. Die Fluorophorschicht befindet sich vorzugsweise zwischen der Strahlquelleneinrichtung und einer die erste elektromagnetische Strahlung und die zweite elektromagnetische Strahlung reflektierenden Schicht des Erzeugnisses.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend der für einen bestimmten Anwendungsfall notwendigen Eigenschaften der erfindungsgemäßen Prüfanordnung und/oder des erfindungsgemäßen Verfahrens durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1:: eine schematische Darstellung einer Prüfanordnung mit einer Prüfanordnung gemäß einer ersten beispielhaften Ausführungsform;
- Fig. 2:: eine schematische Darstellung einer Prüfanordnung mit einer Prüfanordnung gemäß einer zweiten beispielhaften Ausführungsform;
- Fig. 3:: eine schematische Darstellung einer Prüfanordnung mit einer Prüfanordnung gemäß einer dritten beispielhaften Ausführungsform;
- Fig. 4:: eine schematische Darstellung einer Prüfanordnung mit einer Prüfanordnung gemäß einer vierten beispielhaften Ausführungsform und
- Fig. 5:: eine schematische Darstellung eines Fluoreszenzbildes, eines Referenzbildes und eines Korrekturbildes.

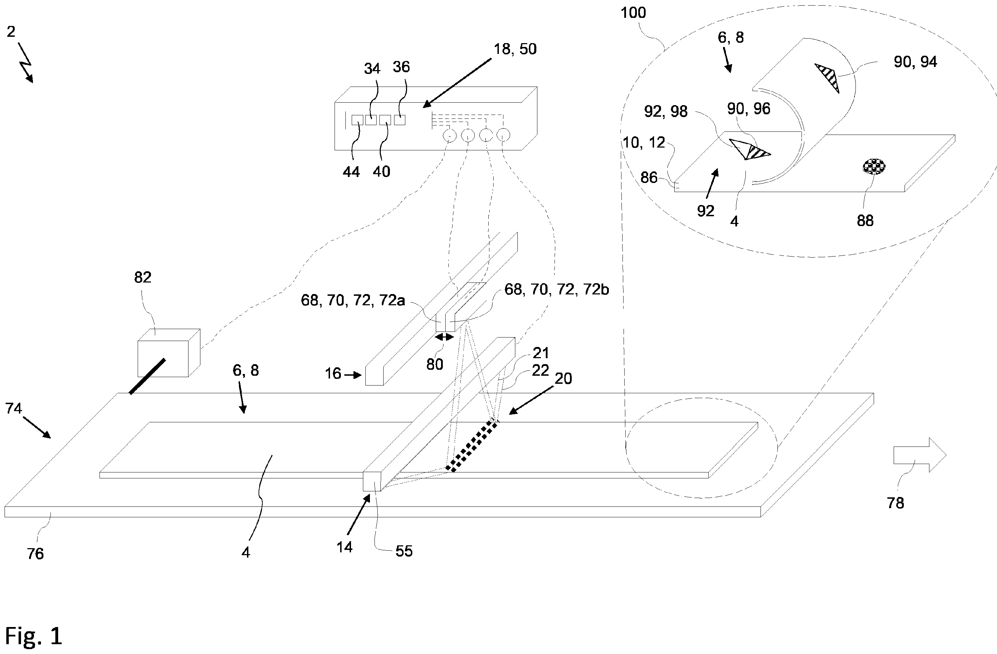

Im Folgenden sind Aufbau und Funktion einer erfindungsgemäßen Prüfanordnung 2 mit Bezug auf Fig. 1 bis 5 beispielhaft beschrieben. Obwohl einige Aspekte der Erfindung lediglich im Rahmen der Prüfanordnung 2 beschrieben werden, ist es selbstverständlich möglich, dass diese Aspekte auch eine Beschreibung des entsprechenden Verfahrens darstellen, wobei z.B. ein Block, ein Modul, eine Einheit, eine Einrichtung oder eine Eigenschaft der Prüfanordnung 2 einem Verfahrensschritt oder einer Funktion eines Verfahrensschritts entspricht. Analog dazu stellen Aspekte, die im Rahmen eines Verfahrensschritts beschrieben werden, auch entsprechend eine Beschreibung eines Blocks, eines Moduls, einer Einheit, einer Einrichtung oder einer Eigenschaft der Prüfanordnung dar.

In Fig. 1 ist eine vereinfachte, schematische Darstellung einer beispielhaften Ausführungsform der Prüfanordnung 2 gezeigt. Die Prüfanordnung 2 ist für eine fluoreszenzbasierte Inspektion eines mindestens einen Fluorophor 4 enthaltenden Erzeugnisses 6 vorgesehen. Der mindestens eine Fluorophor 4 weist hierbei je nach Anwendung ein bekanntes bzw. vordefiniertes Anregungsspektrum und ein bekanntes bzw. vordefiniertes Emissionsspektrum auf. Das Anregungsspektrum kann einen kontinuierlichen Anregungswellenlängenbereich oder eine diskrete Anregungswellenlänge darstellen. Das Emissionsspektrum kann wiederum einen kontinuierlichen Emissionswellenlängenbereich oder eine diskrete Emissionswellenlänge repräsentieren.

Wie in Fig. 1 dargestellt, weist die Prüfanordnung 2 unter anderem eine Strahlquelleneinrichtung 14, eine Aufnahmeeinrichtung 16 und eine Bilddatenverarbeitungseinrichtung 18 auf.

Die Aufnahmeeinrichtung 16 dient zur Erzeugung von Bildaufnahmen 24 eines Inspektionsbereichs 20, in dem das Erzeugnis 6 anordenbar und/oder angeordnet ist.

Die Strahlquelleneinrichtung 14 dient zur Erzeugung einer ersten elektromagnetischen Strahlung 21 und einer zweiten elektromagnetischen Strahlung 22. Die erste elektromagnetische Strahlung 21 hat einen ersten Wellenlängenbereich, der das Anregungsspektrum des mindestens einen Fluorophors 4 enthält. Die zweite elektromagnetische Strahlung 22 hat einen zweiten Wellenlängenbereich, der das Emissionsspektrum des mindestens einen Fluorophors 4 enthält. Der erste Wellenlängenbereich liegt vorzugsweise außerhalb des Emissionsspektrums und überschneidet sich somit nicht mit diesem. Der zweite Wellenlängenbereich liegt vorzugsweise außerhalb des Anregungsspektrums, sodass sich diese nicht miteinander überschneiden.

Wie ferner in Fig. 1 dargestellt ist, kann die Strahlquelleneinrichtung 14 einen einzelnen regelbaren Strahler 55, wie z.B. eine regelbare LED aufweisen, der ausgestaltet ist, jeweils die erste elektromagnetische Strahlung 21 und die zweite elektromagnetische Strahlung 22 zu erzeugen.

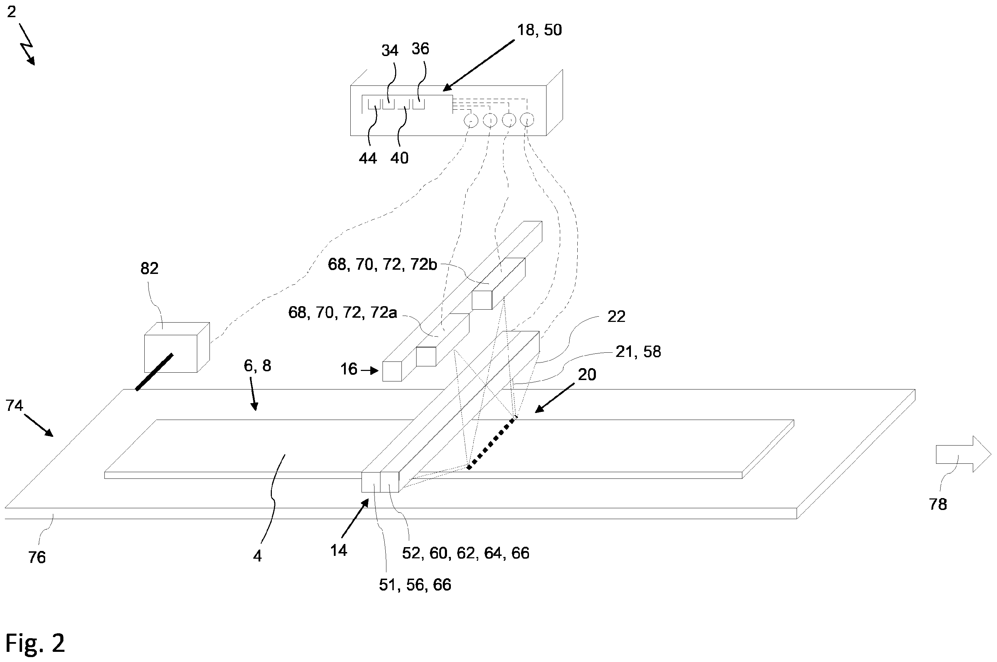

In Fig. 2 ist eine alternative Ausführungsform gezeigt, in der die Strahlquelleneinrichtung 14 einen ersten Strahler 51 und einen separaten zweiten Strahler 52 aufweist, wobei der erste Strahler 51 ausgestaltet ist, die erste elektromagnetische Strahlung 21 zu erzeugen und der zweite Strahler 52 ausgestaltet ist, die zweite elektromagnetische Strahlung 22 zu erzeugen. Beispielsweise kann der erste Strahler 51 als eine UV-Lampe 56 ausgestaltet sein. Entsprechend kann es sich bei der ersten elektromagnetischen Strahlung 21 um UV-A-Strahlung 58 handeln.

Der zweite Strahler 52 kann als eine polychrome Lampe oder eine schmalbandige Lampe 60, insbesondere eine monochromatische Lampe 62, genauer eine Farb-Lampe 64, beispielsweise eine Blaulicht- Lampe ausgestaltet sein, die Licht mit der Wellenlänge des Emissionsspektrums erzeugt.

Der erste Strahler 51 und der zweite Strahler 52 sind in der gezeigten Ausführungsform der Fig. 2 jeweils als Blitzlicht 66 ausgestaltet. Alternativ können der erste Strahler 51 und/oder der zweite Strahler 52 kontinuierlich in Richtung des Inspektionsbereichs 20 strahlen und abwechselnd abgeblendet werden.

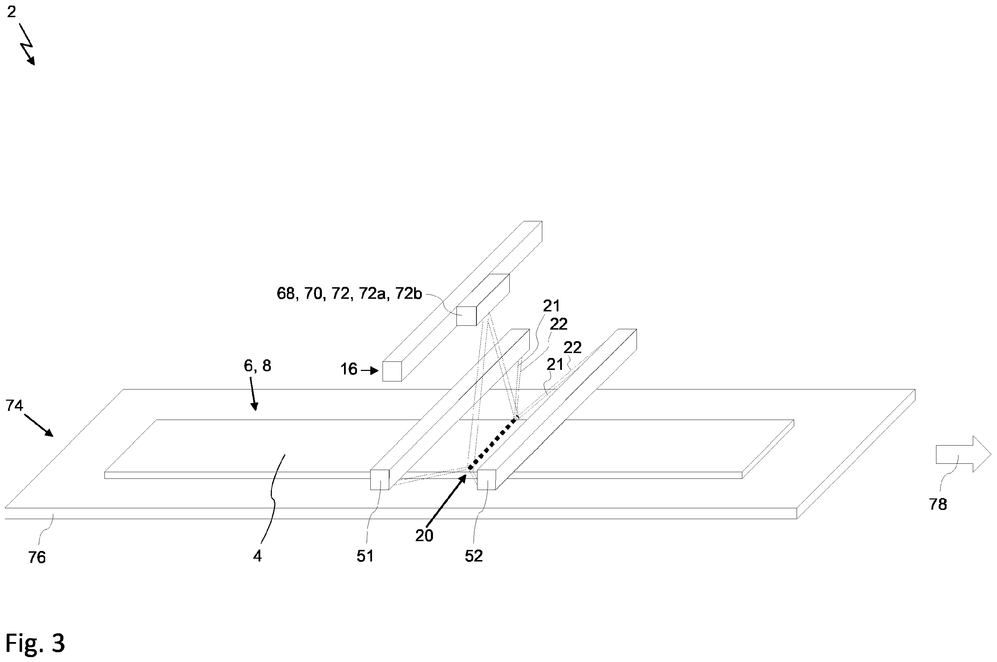

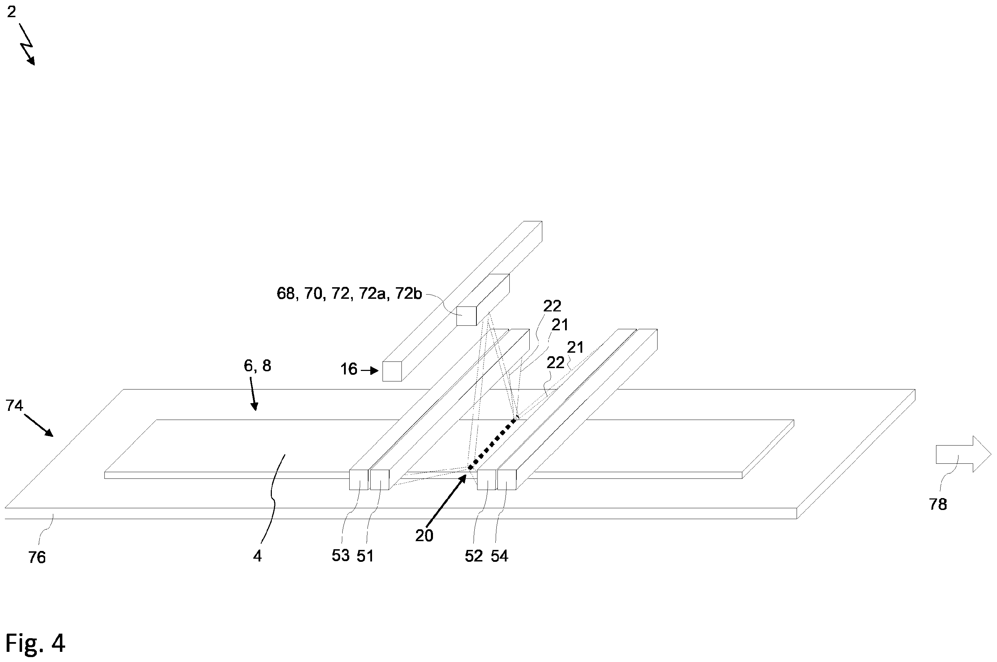

In einer weiteren in Fig. 3 gezeigten Ausführungsform sind der erste Strahler 51 und der zweite Strahler 52 beabstandet voneinander angeordnet und beleuchten den Inspektionsbereich 20 von zwei Seiten. Sowohl in dem ersten Strahler 51 als auch in dem zweiten Strahler 52 stehen beide elektromagnetischen Strahlungen 21 und 22 zur Verfügung. In einer alternativen Anordnung (nicht dargestellt) kann im Strahler 51 nur die erste elektromagnetische Strahlung 21 und im Strahler 52 nur die zweite elektromagnetische Strahlung 22 zur Verfügung gestellt werden. In einer weiteren in Fig. 4 gezeigten Ausführungsform sind zu dem ersten Strahler 51 und dem zweiten Strahler 52 zwei weitere Strahler 53 und 54 vorgesehen. Strahler 51 und der Strahler 52 stellen die erste elektromagnetische Strahlung 21 zur Verfügung wohingegen Strahler 53 und der Strahler 54 die zweite elektromagnetische Strahlung 22 zur Verfügung stellen.

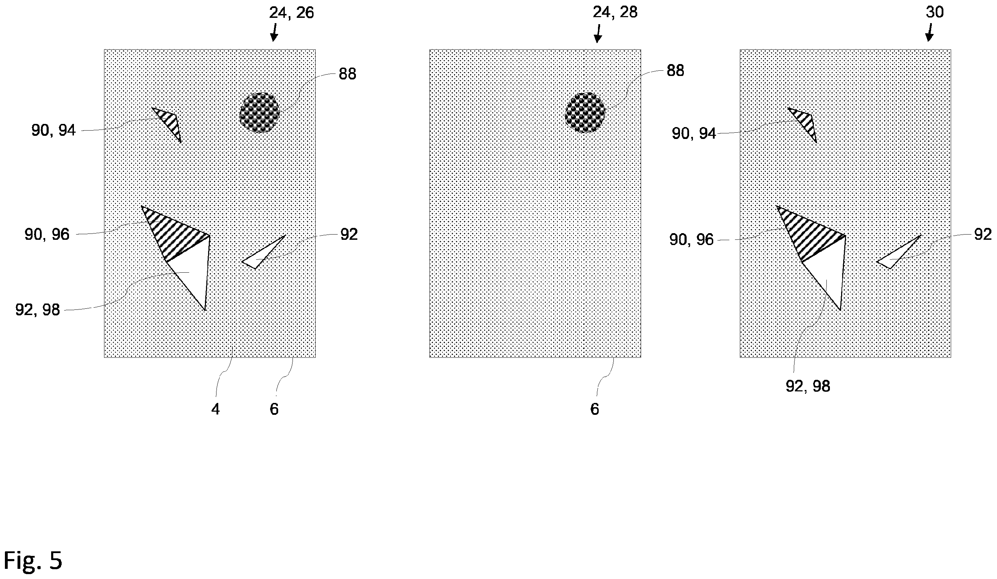

Die Prüfanordnung 2 ist entsprechend ausgestaltet, den Inspektionsbereich 20 mit der ersten elektromagnetischen Strahlung 21 zu bestrahlen und mit der Aufnahmeeinrichtung 16 mindestens ein Fluoreszenzbild 26 des mit der ersten elektromagnetischen Strahlung 21 bestrahlten Inspektionsbereichs 20 aufzunehmen (siehe Fig. 5). Ferner ist die Prüfanordnung 2 ausgestaltet, den Inspektionsbereich 20 mit der zweiten elektromagnetischen Strahlung 22 zu bestrahlen und mit der Aufnahmeeinrichtung 16 mindestens ein Referenzbild 28 des mit der zweiten elektromagnetischen Strahlung 22 bestrahlten Inspektionsbereichs 20 aufzunehmen (siehe Fig. 5).

Obwohl in Fig. 1 und 2 sowohl die erste elektromagnetische Strahlung 21 als auch die zweite elektromagnetische Strahlung 22 eingezeichnet ist, erfolgt die jeweilige Bestrahlung mit der ersten elektromagnetischen Strahlung 21 und der zweiten elektromagnetischen Strahlung 22 vorzugsweise zeitversetzt. Entsprechend erfolgt auch das Aufnehmen des mindestens einen Fluoreszenzbildes 26 und des mindestens einen Referenzbildes 28 zueinander zeitversetzt.

Die Aufnahmeeinrichtung 16 kann beispielsweise eine einzelne Kamera 68, insbesondere eine Fluoreszenzkamera 70 oder auch mehrere Kameras aufweisen. Die Kameras 68 der gezeigten Ausführungsformen aus Fig. 1 und 2 sind jeweils als Zeilenkameras 72, 72a, 72b ausgestaltet. Die Prüfanordnung 2 weist in diesen Ausführungsformen außerdem ein Fördergerät 74, insbesondere ein Förderband 76 zur Bewegung des Erzeugnisses 6 durch den Inspektionsbereich 20 auf. Dadurch wird eine kontinuierliche Relativbewegung 78 zwischen dem Erzeugnis 6 und der Aufnahmeeinrichtung 16 ermöglicht. Alternativ oder zusätzlich kann auch die Aufnahmeeinrichtung 16 relativ zum Erzeugnis 6 bewegt werden.

Wie in Fig. 1 gezeigt, kann die Aufnahmeeinrichtung 16 zwei Zeilenkameras 72a, 72b aufweisen. Die zwei Zeilenkameras 72a, 72b können nebeneinander oder voneinander beabstandet angeordnet sein. Somit kann der Inspektionsbereich 20 abwechselnd mit der ersten elektromagnetischen Strahlung 21 und der zweiten elektromagnetischen Strahlung 22 bestrahlt und dabei jeweils mit den zwei Zeilenkameras 72a, 72b im Wechsel aufgenommen werden. Vorzugsweise ist hierbei die Aufnahmefrequenz der zwei Zeilenkameras 72a, 72b derart eingerichtet, dass ein zeitlicher Abstand zwischen zwei aufeinanderfolgenden Aufnahmen dem Quotienten aus dem räumlichen Abstand 80 zwischen den zwei Zeilenkameras 72a, 72b und der Vorschubgeschwindigkeit des Fördergeräts 74 entspricht. Auf diese Weise kann eine Pixelsynchronität zwischen dem mindestens einen Fluoreszenzbild 26 und dem mindestens einen Referenzbild 28 erreicht werden. Wahlweise kann das Fördergerät 74 einen Drehgeber 82 aufweisen, der für diesen Zweck eine Taktung vorgibt.

Eine Sensitivität der Aufnahmeeinrichtung 16 kann hardwareseitig und/oder softwareseitig auf den zweiten Wellenlängenbereich beschränkt sein. Somit wird mit der gezeigten Ausführungsform der erste Wellenlängenbereich nicht in dem mindestens ein Fluoreszenzbild 26 abgebildet.

Optional kann die Prüfanordnung 2 eine Filtereinrichtung (nicht gezeigt) zwischen dem Inspektionsbereich 20 und der Aufnahmeeinrichtung 16 aufweisen. Die Filtereinrichtung kann ausgestaltet sein, den ersten Wellenlängenbereich zu blockieren und/oder lediglich den zweiten Wellenlängenbereich, vorzugsweise das Emissionsspektrum durchzulassen. Insbesondere kann die Filtereinrichtung entsprechende optische Filter, d.h. Bandstoppfilter und/oder Bandbreitenfilter aufweisen.

Ferner optional kann die Prüfanordnung 2 eine Lichtabschirmeinrichtung (nicht gezeigt) zur Verdunkelung oder zumindest zur Abdunkelung des Inspektionsbereichs 20 aufweisen. Alternativ kann die Prüfanordnung 2 auch eine Dunkelkammer aufweisen.

Die Bilddatenverarbeitungseinrichtung 18 dient zur Bildverarbeitung der Bildaufnahmen 24, 26, 28. Insbesondere ist die Bilddatenverarbeitungseinrichtung 18 ausgestaltet, basierend auf dem mindestens einen Fluoreszenzbild 26 und dem mindestens einen Referenzbild 28 ein Korrekturbild 30 zu erzeugen (siehe Fig. 5).

Das Korrekturbild 30 kann beispielsweise durch Differenzbildung aus dem mindestens einem Fluoreszenzbild 26 und die mindestens einen Referenzbild 28 erzeugt werden. Hierfür kann die Bilddatenverarbeitungseinrichtung 18 ein Subtraktionsmodul 34 zur Durchführung der Differenzbildung aufweisen. Das Subtraktionsmodul 34 kann hierbei ausgestaltet sein, die Farbwerte bzw. Helligkeitswerte aus den Bilddaten des mindestens einen Fluoreszenzbildes 26 und des mindestens einen Referenzbildes 28 pixelweise zu subtrahieren und den jeweiligen Ergebniswert als Farbwert bzw. Helligkeitswert eines dazugehörigen Pixels im Korrekturbild 30 auszugeben.

Optional kann die Bilddatenverarbeitungseinrichtung 18 ferner ein Geometrieanpassungsmodul 36 zur Durchführung einer Geometrieanpassung und ein Kontrastanpassungsmodul 40 zur Durchführung einer Kontrastanpassung aufweisen. Das Geometrieanpassungsmodul 36 kann ausgestaltet sein, das mindestens eine Fluoreszenzbild 26 deckungsgleich oder zumindest annähernd deckungsgleich mit dem mindestens einen Referenzbild 28 auszurichten. Das Kontrastanpassungsmodul 40 kann wiederum ausgestaltet sein, die Kontrastverhältnisse des mindestens einen Fluoreszenzbildes 26 und des mindestens einen Referenzbildes 28 gegenseitig anzugleichen oder zumindest annähernd anzupassen.

Außerdem kann die Bilddatenverarbeitungseinrichtung 18 ein Formerkennungsmodul 44 zur Durchführung einer, vorzugsweise automatischen, Formerkennung im Korrekturbild 30 aufweisen. Das Formerkennungsmodul 44 kann ausgestaltet sein, die Formerkennung mittels eines Schwellwertverfahrens oder eines anderen, aus dem Stand der Technik bekannten Verfahrens bzw. Algorithmus durchzuführen.

Die Bilddatenverarbeitungseinrichtung 18 sowie ihre Bestandteile, das heißt, das Subtraktionsmodul 34, das Geometrieanpassungsmodul 36, das Kontrastanpassungsmodul 40 und/oder das Formerkennungsmodul 44 können unabhängig voneinander durch Hardware und/oder Software, insbesondere durch computerimplementierte Verfahren verwirklicht sein. Die Bilddatenverarbeitungseinrichtung 18 ist beispielsweise als ein Bilddatenprozessor 50 ausgestaltet.

Die Funktionsweise der erfindungsgemäßen Prüfanordnung 2 ist nachfolgend anhand eines konkreten Anwendungsbeispiels erläutert.

Bei dem Erzeugnis 6 kann es sich beispielsweise um ein industrielles Erzeugnis, das aus mehreren Schichten bzw. Lagen aufgebaut ist, insbesondere einen mehrlagigen, mehrschichtigen und/oder laminierten Verbundwerkstoff oder ein Erzeugnis aus derartigem Verbundwerkstoff, z.B., aber nicht ausschließlich ein Fußbodenlaminat 8 handeln.

Eine Schicht 10 des Erzeugnisses 6 enthält den mindestens einen Fluorophor 4. Zur besseren Textverständlichkeit wird die Schicht 10 mit dem mindestens einen Fluorophor 4 nachfolgend als Fluorophorschicht 12 bezeichnet, obwohl diese Schicht 10 nicht vollständig aus dem mindestens einen Fluorophor 4 bestehen muss und außer dem mindestens einen Fluorophor 4 noch weitere Bestandteile aufweisen kann.

Im gezeigten Beispiel der Fig. 1 ist die Fluorophorschicht 12 als die oberste und äußerste Schicht des Erzeugnisses 6 dargestellt. Die vorliegende Erfindung ist jedoch auch für Erzeugnisse einsetzbar, bei denen sich auf der Fluorophorschicht 12 noch weitere für die erste elektromagnetische Strahlung 21 und die zweite elektromagnetische Strahlung 22 transparente Schichten befinden.

Die Fluorophorschicht 12 befindet sich im gezeigten Beispiel der Fig. 1 auf einer die erste elektromagnetische Strahlung 21 und die zweite elektromagnetische Strahlung 22, insbesondere das Emissionsspektrum reflektierenden Schicht 86 des Erzeugnisses 6. Vorzugsweise ist die Fluorophorschicht 12 derart angeordnet, dass sie sich zwischen der Strahlquelleneinrichtung 14 und der reflektierenden Schicht 86 sowie zwischen der Aufnahmeeinrichtung 16 und der reflektierenden Schicht 86 befindet.

Die reflektierende Schicht 86 kann Markierungen, wie z.B. Muster, Dekors, Logos oder Aufschriften aufweisen, welche eine einwandfreie Charakteristik des Erzeugnisses 6 darstellen. In Fig. 1 ist rein beispielhaft eine Markierung 88 angedeutet.

Die Fluorophorschicht 12 kann ungewollte Fehlstellen 90, 92, die aufgrund der Transparenz und/oder der geringen Schichtdicke der Fluorophorschicht 12 mit dem bloßen Auge oder mit herkömmlichen optischen Inspektionsmaßnahmen nicht erkennbar sind, aufweisen. Zu solchen Fehlstellen 90, 92 zählen beispielsweise Löcher 94 in der Fluorophorschicht 12 oder Ablösungen 96 und Faltungen 98 der Fluorophorschicht 12. Dies ist in der Vergrößerung 100 in Fig. 1 dargestellt. Hierbei ist die Fluorophorschicht 12 lediglich zu Unterscheidungszwecken von der reflektierenden Schicht 86 teilweise hochgerollt dargestellt.

Wie in Fig. 5 links dargestellt ist, können die Fehlstellen 90, 92 in dem mindestens einen Fluoreszenzbild 26 sichtbar gemacht werden, zumal Fehlstellen 90, an denen die Fluorophorschicht 12 unterbrochen ist, nicht fluoreszieren und Fehlstellen 92, an denen die Fluorophorschicht 12 gedoppelt ist, anders fluoreszieren als der Rest der Fluorophorschicht 12. Insbesondere unterscheiden sich die Fehlstellen 90, 92 in ihren optischen Eigenschaften deutlich vom Rest der Fluorophorschicht 12.

Gleichzeitig wird jedoch auch die Markierung 88 in dem mindestens einen Fluoreszenzbild 26 sichtbar, da die Fluorophorschicht 12 beim Fluoreszieren sekundäre Beleuchtungseffekte erzeugt, welche die Markierung 88 in dem mindestens einen Fluoreszenzbild 26 erscheinen lassen.

Unter gewissen Umständen kann es dazu kommen, dass der Unterschied zwischen den Fehlstellen 90, 92 und der Markierung 88 nicht deutlich genug ist, um eine zuverlässige Unterscheidung, beispielsweise im Rahmen der Formerkennung vorzunehmen.

Erfindungsgemäß werden deshalb die soeben genannten sekundären Beleuchtungseffekte gezielt in dem mindestens einen Referenzbild 28 nachgestellt. Dies gelingt insbesondere, weil der zweite Wellenlängenbereich der zweiten elektromagnetischen Strahlung 22 das Emissionsspektrum des mindestens einen Fluorophors 4 enthält und somit die Beleuchtungsverhältnisse, die zum Zeitpunkt des Auftretens der sekundären Beleuchtungseffekte vorlagen, simuliert werden können. Folglich wird die Markierung 88 auch in dem mindestens einen Referenzbild 28 abgebildet.

Wie in Fig. 5 mittig dargestellt, sind die Fehlstellen 90, 92 nicht in dem mindestens einen Referenzbild 28 sichtbar, da sich der zweite Wellenlängenbereich vorzugsweise nicht mit dem Anregungsspektrum des mindestens einen Fluorophors 4 überschneidet. Insbesondere wird beim Aufnahmen des mindestens einen Referenzbildes 28 keine oder zumindest nur sehr wenig Fluoreszenz des mindestens einen Fluorophors 4 ausgelöst, sodass die Fehlstellen 90, 92 nicht oder zumindest nicht so deutlich wie in dem mindestens einen Fluoreszenzbild 26 in Erscheinung treten.

Bei der Erzeugung des Korrekturbildes 30 kann folglich die Sichtbarkeit der Markierung 88 vollständig aufgehoben oder zumindest verringert werden, während die Sichtbarkeit der Fehlstellen 90, 92 unverändert erhalten bleibt oder zumindest nur geringfügig sinkt. Dies ist in Fig. 5 rechts dargestellt.

Mithilfe der erfindungsgemäßen Prüfanordnung 2 und mithilfe des erfindungsgemäßen Verfahrens kann somit das Korrekturbild 30 derart erzeugt werden, dass eine zuverlässigere Detektion der Fehlstellen 90, 92 möglich ist, indem der störende Einfluss der Markierung 88 eliminiert wird.

## Patentansprüche

1. Prüfanordnung (1,2) zur fluoreszenzbasierten Inspektion eines Laminatprodukts, das aus mehreren Schichten (10, 12, 86) aufgebaut ist, wobei eine Schicht (10, 12) mindestens einen Fluorophor (4) mit einem Anregungsspektrum und einem Emissionsspektrum enthält, wobei die Prüfanordnung (2)
- eine Strahlquelleneinrichtung (14) zur Erzeugung einer ersten elektromagnetischen Strahlung (21) in einem ersten Wellenlängenbereich, der das Anregungsspektrum des mindestens einen Fluorophors (4) enthält, wobei die erste Strahlquelleneinrichtung (14) als eine UV-Lampe, UV-Leuchte, Schwarzlichtlampe oder Schwarzlichtleuchte ausgestaltet ist und somit die erste elektromagnetische Strahlung (21) UV-A-Strahlung ist, und einer zweiten elektromagnetischen Strahlung (22) in einem zweiten Wellenlängenbereich, der das Emissionsspektrum des mindestens einen Fluorophors (4) enthält,
- eine Aufnahmeeinrichtung (16) zur Erzeugung von Bildaufnahmen (24) eines Inspektionsbereichs (20), in dem das Erzeugnis (6) anordenbar ist, und
- eine Bilddatenverarbeitungseinrichtung (18) zur Bildverarbeitung der Bildaufnahmen (24)
aufweist und ausgestaltet ist, mit der Aufnahmeeinrichtung (16) mindestens ein Fluoreszenzbild (26) des mit der ersten elektromagnetischen Strahlung (21) bestrahlten Inspektionsbereichs (20) aufzunehmen sowie mit der Aufnahmeeinrichtung (16) mindestens ein Referenzbild (28) des mit der zweiten elektromagnetischen Strahlung (22) bestrahlten Inspektionsbereichs (20) aufzunehmen, und wobei die Bilddatenverarbeitungseinrichtung (18) ausgestaltet ist, ein Korrekturbild (30) durch Differenzbildung aus dem mindestens einen Fluoreszenzbild (26) und dem mindestens einen Referenzbild (28) zu erzeugen.

2. Prüfanordnung (1,2) nach Anspruch 1, wobei die Bilddatenverarbeitungseinrichtung (18) ein Subtraktionsmodul (34) zur Durchführung der Differenzbildung aufweist.

3. Prüfanordnung (1,2) nach Anspruch 2, wobei das Subtraktionsmodul (34) ausgestaltet ist, die Farbwerte bzw. Helligkeitswerte aus den Bilddaten des mindestens einen Fluoreszenzbildes (26) und des mindestens einen Referenzbildes (28) pixelweise zu subtrahieren und den jeweiligen Ergebniswert als Farbwert bzw. Helligkeitswert des dazugehörigen Pixels des Korrekturbildes (30) auszugeben.

4. Prüfanordnung (1,2) nach einem der Ansprüche 1 bis 3, wobei die Bilddatenverarbeitungseinrichtung (18) ausgestaltet ist, im Korrekturbild (30) eine Formerkennung durchzuführen.

5. Prüfanordnung (1,2) nach einem der Ansprüche 1 bis 4, wobei der erste Wellenlängenbereich außerhalb des Emissionsspektrums des mindestens einen Fluorophors (4) liegt.

6. Prüfanordnung (1,2) nach einem der Ansprüche 1 bis 5, wobei der zweite Wellenlängenbereich außerhalb des Anregungsspektrums des mindestens einen Fluorophors (4) liegt.

7. Prüfanordnung (1,2) nach einem der Ansprüche 1 bis 6, wobei die zweite elektromagnetische Strahlung (22) von einer Blaulicht-Lampe erzeugbar ist.

8. Prüfanordnung (1,2) nach einem der Ansprüche 1 bis 7, wobei die Prüfanordnung (1,2) ein Fördergerät (74) zur Bewegung des Erzeugnisses (6) durch den Inspektionsbereich (20) aufweist, und wobei die Aufnahmeeinrichtung (16) als eine Zeilenkamera (72) oder eine mehrzeilige Zeilenkamera oder eine Matrixkamera im Zeilen- oder Mehrzeilenmodus ausgestaltet ist.

9. Prüfanordnung (1,2) nach einem der Ansprüche 1 bis 8, wobei die Prüfanordnung (1,2) ausgestaltet ist, das mindestens eine Fluoreszenzbild (26) und das mindestens eine Referenzbild (28) pixelsynchron aufzunehmen.

10. Verfahren zur fluoreszenzbasierten Inspektion eines Laminatprodukts, das aus mehreren Schichten (10, 12, 86) aufgebaut ist, wobei eine Schicht (10, 12) mindestens einen Fluorophor (4) mit einem Anregungsspektrum und einem Emissionsspektrum enthält , umfassend die Schritte:
- Positionieren des Laminatprodukts in einem Inspektionsbereich (20),
- Aufnehmen mindestens eines Fluoreszenzbildes (26) des mit einer ersten, das Anregungsspektrum des mindestens einen Fluorophors (4) enthaltenden, elektromagnetischen Strahlung (21) bestrahlten Inspektionsbereichs (20),
- Aufnehmen mindestens eines Referenzbildes (28) des mit einer zweiten, das Emissionsspektrum des mindestens einen Fluorophors (4) enthaltenden, elektromagnetischen Strahlung (22) bestrahlten Inspektionsbereichs (20), und
- Erzeugen eines Korrekturbildes (30) durch Differenzbildung aus dem mindestens einen Fluoreszenzbild (26) und dem mindestens einen Referenzbild (28).

11. Verfahren zur fluoreszenzbasierten Inspektion eines Laminatprodukts, wobei Farbwerte bzw. Helligkeitswerte aus den Bilddaten des mindestens einen Fluoreszenzbildes (26) und des mindestens einen Referenzbildes (28) pixelweise subtrahiert und die jeweiligen Ergebniswerte als Farbwert bzw. Helligkeitswert des dazugehörigen Pixels des Korrekturbildes (30) ausgegeben werden.

## Claims

1. Test arrangement (1, 2) for the fluorescence-based inspection of a laminate product composed of a plurality of layers (10, 12, 86), wherein one layer (10, 12) contains at least one fluorophore (4) with an excitation spectrum and an emission spectrum, wherein the test arrangement (2) comprises
- a beam source device (14) for generating first electromagnetic radiation (21) in a first wavelength range containing the excitation spectrum of the at least one fluorophore (4), wherein the first beam source device (14) is in the form of a UV lamp, UV light fitting, black-light lamp or black-light light fitting and thus the first electromagnetic radiation (21) is UV-A radiation, and second electromagnetic radiation (22) in a second wavelength range containing the emission spectrum of the at least one fluorophore (4),
- a capturing device (16) for generating images (24) of an inspection region (20) in which the product (6) can be arranged, and
- an image data processing device (18) for processing the images (24),
and is configured to capture, by means of the capturing device (16), at least one fluorescence image (26) of the inspection region (20) irradiated with the first electromagnetic radiation (21) and to capture, by means of the capturing device (16), at least one reference image (28) of the inspection region (20) irradiated with the second electromagnetic radiation (22), and wherein the image data processing device (18) is configured to generate a correction image (30) by differencing the at least one fluorescence image (26) and the at least one reference image (28).

2. Test arrangement (1, 2) according to claim 1, wherein the image data processing device (18) has a subtraction module (34) for carrying out the differencing.

3. Test arrangement (1, 2) according to claim 2, wherein the subtraction module (34) is configured to subtract, pixel by pixel, the color values or brightness values from the image data of the at least one fluorescence image (26) and of the at least one reference image (28) and to output the relevant result value as a color value or brightness value of the corresponding pixel of the correction image (30).

4. Test arrangement (1, 2) according to any of claims 1 to 3, wherein the image data processing device (18) is configured to perform shape recognition in the correction image (30).

5. Test arrangement (1, 2) according to any of claims 1 to 4, wherein the first wavelength range lies outside the emission spectrum of the at least one fluorophore (4).

6. Test arrangement (1, 2) according to any of claims 1 to 5, wherein the second wavelength range lies outside the excitation spectrum of the at least one fluorophore (4).

7. Test arrangement (1, 2) according to any of claims 1 to 6, wherein the second electromagnetic radiation (22) can be generated by a blue-light lamp.

8. Test arrangement (1, 2) according to any of claims 1 to 7, wherein the test arrangement (1, 2) has a conveyor apparatus (74) for moving the product (6) through the inspection region (20), and wherein the capturing device (16) is in the form of a line scan camera (72) or a multi-line line scan camera, or a matrix camera in line mode or multi-line mode.

9. Test arrangement (1, 2) according to any of claims 1 to 8, wherein the test arrangement (1, 2) is configured to capture the at least one fluorescence image (26) and the at least one reference image (28) pixel-synchronously.

10. Method for the fluorescence-based inspection of a laminate product composed of a plurality of layers (10, 12, 86), wherein one layer (10, 12) contains at least one fluorophore (4) with an excitation spectrum and an emission spectrum, comprising the following steps:
- positioning the laminate product in an inspection region (20),
- capturing at least one fluorescence image (26) of the inspection region (20) irradiated with first electromagnetic radiation (21) containing the excitation spectrum of the at least one fluorophore (4),
- capturing at least one reference image (28) of the inspection region (20) irradiated with second electromagnetic radiation (22) containing the emission spectrum of the at least one fluorophore (4), and
- generating a correction image (30) by differencing the at least one fluorescence image (26) and the at least one reference image (28).

11. Method for the fluorescence-based inspection of a laminate product, wherein color values or brightness values are subtracted, pixel by pixel, from the image data of the at least one fluorescence image (26) and of the at least one reference image (28), and the respective result values are output as a color value or brightness value of the associated pixel of the correction image (30).

## Revendications

1. Dispositif de contrôle (1, 2) permettant l'inspection basée sur la fluorescence d'un produit stratifié constitué de plusieurs couches (10, 12, 86), dans lequel une couche (10, 12) contient au moins un fluorophore (4) comportant un spectre d'excitation et un spectre d'émission, dans lequel le dispositif de contrôle (2) présente
- un dispositif de source de rayonnement (14) permettant la production d'un premier rayonnement électromagnétique (21) dans une première gamme de longueurs d'onde contenant le spectre d'excitation de l'au moins un fluorophore (4), dans lequel le premier dispositif de source de rayonnement (14) est configuré comme une lampe UV, un luminaire UV, une lampe à lumière noire ou un luminaire à lumière noire et le premier rayonnement électromagnétique (21) est ainsi un rayonnement UV-A, et un second rayonnement électromagnétique (22) dans une seconde gamme de longueurs d'onde contenant le spectre d'émission de l'au moins un fluorophore (4),
- un dispositif d'enregistrement (16) permettant la production de prises de vue (24) d'une zone d'inspection (20) dans laquelle le produit (6) peut être disposé, et
- un dispositif de traitement de données d'image (18) permettant le traitement d'image des prises de vue (24)
et est configuré pour enregistrer avec le dispositif d'enregistrement (16) au moins une image fluorescente (26) de la zone d'inspection (20) irradiée par le premier rayonnement électromagnétique (21) ainsi que pour enregistrer avec le dispositif d'enregistrement (16) au moins une image de référence (28) de la zone d'inspection (20) irradiée par le second rayonnement électromagnétique (22), et dans lequel le dispositif de traitement de données d'image (18) est configuré pour produire une image de correction (30) en soustrayant l'au moins une image fluorescente (26) de l'au moins une image de référence (28).

2. Dispositif de contrôle (1, 2) selon la revendication 1, dans lequel le dispositif de traitement de données d'image (18) présente un module de soustraction (34) permettant d'exécuter la soustraction.

3. Dispositif de contrôle (1, 2) selon la revendication 2, dans lequel le module de soustraction (34) est configuré pour soustraire, pixel par pixel, les valeurs de couleur ou les valeurs de luminosité des données d'image de l'au moins une image fluorescente (26) et de l'au moins une image de référence (28) et pour émettre la valeur de résultat respective en tant que valeur de couleur ou valeur de luminosité du pixel correspondant de l'image de correction (30).

4. Dispositif de contrôle (1, 2) selon l'une des revendications 1 à 3, dans lequel le dispositif de traitement de données d'image (18) est configuré pour exécuter une reconnaissance de forme dans l'image de correction (30).

5. Dispositif de contrôle (1, 2) selon l'une des revendications 1 à 4, dans lequel la première gamme de longueurs d'onde est située en dehors du spectre d'émission de l'au moins un fluorophore (4).

6. Dispositif de contrôle (1, 2) selon l'une des revendications 1 à 5, dans lequel la seconde gamme de longueurs d'onde est située en dehors du spectre d'excitation de l'au moins un fluorophore (4).

7. Dispositif de contrôle (1, 2) selon l'une des revendications 1 à 6, dans lequel le second rayonnement électromagnétique (22) peut être produit par une lampe à lumière bleue.

8. Dispositif de contrôle (1, 2) selon l'une des revendications 1 à 7, dans lequel le dispositif de contrôle (1, 2) présente un appareil d'acheminement (74) permettant de déplacer le produit (6) à travers la zone d'inspection (20), et dans lequel le dispositif d'enregistrement (16) est configuré comme une caméra linéaire (72) ou une caméra linéaire multilignes ou une caméra matricielle en mode ligne ou multiligne.

9. Dispositif de contrôle (1, 2) selon l'une des revendications 1 à 8, dans lequel le dispositif de contrôle (1, 2) est configuré pour enregistrer de manière à synchroniser les pixels l'au moins une image fluorescente (26) et l'au moins une image de référence (28).

10. Procédé permettant l'inspection basée sur la fluorescence d'un produit stratifié constitué de plusieurs couches (10, 12, 86), dans lequel une couche (10, 12) contient au moins un fluorophore (4) comportant un spectre d'excitation et un spectre d'émission, comprenant les étapes consistant à :
- positionner le produit stratifié dans une zone d'inspection (20),
- enregistrer au moins une image fluorescente (26) de la zone d'inspection (20) irradiée par un premier rayonnement électromagnétique (21) contenant le spectre d'excitation de l'au moins un fluorophore (4),
- enregistrer au moins une image de référence (28) de la zone d'inspection (20) irradiée par un second rayonnement électromagnétique (22) contenant le spectre d'émission de l'au moins un fluorophore (4), et
- produire une image de correction (30) en soustrayant l'au moins une image de fluorescence (26) de l'au moins une image de référence (28).

11. Procédé permettant l'inspection basée sur la fluorescence d'un produit stratifié, dans lequel des valeurs de couleur ou des valeurs de luminosité sont soustraites pixel par pixel des données d'image de l'au moins une image fluorescente (26) et de l'au moins une image de référence (28), et les valeurs de résultat respectives sont émises en tant que valeur de couleur ou valeur de luminosité du pixel correspondant de l'image de correction (30).
